# EUROPÄISCHE PATENTSCHRIFT

(11) **EP 3 390 139 B1**
(45) Veröffentlichungstag und Bekanntmachung des Hinweises auf die Patenterteilung: **08.02.2023**
(21) Anmeldenummer: 16825724.4
(22) Anmeldetag: 19.12.2016
(51) Int. Cl.: B60L 53/30, B67D 7/04, B60L 53/35, B60L 53/37

(54) **VERFAHREN ZUR DURCHFÜHRUNG VON ENERGIEVERSORGUNGSVORGÄNGEN ZWISCHEN WENIGSTENS EINER ENERGIEVERSORGUNGSEINHEIT UND MEHREREN MIT ENERGIE ZU VERSORGENDEN KRAFTFAHRZEUGEN, SOWIE ENERGIEVERSORGUNGSEINHEIT**
METHOD FOR IMPLEMENTING POWER SUPPLY PROCEDURES FROM AT LEAST ONE POWER SUPPLY UNIT TO A PLURALITY OF MOTOR VEHICLES TO BE SUPPLIED WITH POWER AND POWER SUPPLY UNIT
PROCÉDÉ D'EXÉCUTION DE PROCESSUS D'ALIMENTATION EN ÉNERGIE ENTRE AU MOINS UNE UNITÉ D'ALIMENTATION EN ÉNERGIE ET PLUSIEURS VÉHICULES AUTOMOBILES DEVANT ÊTRE ALIMENTÉS EN ÉNERGIE ET UNITÉ D'ALIMENTATION EN ÉNERGIE

(30) Priorität: 18.12.2015 DE 102015225986
(43) Veröffentlichungstag der Anmeldung: 24.10.2018
(73) Patentinhaber: Volkswagen AG, 38440 Wolfsburg (DE); KUKA Deutschland GmbH, 86165 Augsburg (DE)
(72) Erfinder: SCHÜTZ, Daniel, 38165 Lehre/Essenrode (DE); GROTE, Michael, 38518 Gifhorn (DE); STIEG, Jürgen, 38550 Isenbüttel (DE); JUNGE, Lutz, 38106 Braunschweig (DE); HORSTMANN, Sven, 12163 Berlin (DE); BAGDONAT, Thorsten, 38106 Braunschweig (DE); GRYSCZYK, Sebastian, 38102 Braunschweig (DE); WEISER, Andreas, 38114 Braunschweig (DE); SETTELE, Norbert, 86574 Petersdorf-Willprechtszell (DE)
(74) Vertreter: Zucker, Volker
(86) Internationale Anmeldenummer: PCT/EP2016/081680
(87) Internationale Veröffentlichungsnummer: WO 2017/103250

(56) Entgegenhaltungen:
- EP-A1- 2 500 888
- EP-A2- 2 332 772
- WO-A1-94/03391
- WO-A1-2015/126320
- WO-A1-2016/096194
- DE-A1-102012 216 980
- US-A1- 2013 338 820
- US-A1- 2014 305 545
- US-A1- 2015 042 278
- US-B1- 9 056 555

## Beschreibung

Die Erfindung betrifft ein Verfahren zur Durchführung von Energieversorgungsvorgängen zwischen wenigstens einer Energieversorgungseinheit und mehreren mit Energie zu versorgenden Kraftfahrzeugen mit den Merkmalen vom Oberbegriff des Patentanspruchs 1.

Die Erfindung betrifft ferner eine Energieversorgungseinheit zur Durchführung des Verfahrens.

Die WO 2013/041133 A1 offenbart eine auf einer Schiene verfahrbare Energieversorgungseinheit (Ladeeinheit), welche eine Vielzahl von Parkplätzen eines Abstellplatzes anfahren und geparkte Elektrofahrzeuge mit elektrischem Strom versorgen kann.

Die verfahrbare Ladeeinheit ist mit einer Bilderfassungseinrichtung in Form einer Kamera ausgerüstet, welche zur Erkennung einer Position einer Energieversorgungs-Schnittstelle (Ladeschnittstelle) eines aufzuladenden Kraftfahrzeugs dient. Zur Vereinfachung der Bilderkennung wird vorgeschlagen, die Ladeschnittstelle mit geeigneten visuellen Merkmalen, beispielsweise Lampen, Markierungen oder Reflektoren zu versehen.

Dabei wird vorgeschlagen, dass die Ladeeinheit mittels eines Roboterarms (ausfahrbare Stange) ein Ladekabel der Ladeeinheit ausfahren kann. Das Ladekabel wird jeweils nach dem Anfahren eines Parkplatzes ausgefahren und der zugehörige Ladestecker in die Ladeschnittstelle des aufzuladenden Kraftfahrzeugs gesteckt. Um den Ladevorgang zwischen einem aufzuladenden Elektrofahrzeug und der Ladeeinheit zu synchronisieren ist zumindest eine Bestätigung des Ladevorgangs durch den Fahrzeugführer erforderlich. Daher wird eine Kommunikation des Kraftfahrzeugs mit der Ladeeinheit über eine Kommunikationseinrichtung, beispielsweise über einen WLAN-Port ermöglicht.

Es wird ferner vorgeschlagen, entweder mehrere Ladeeinheiten einzusetzen, um einen Parallelbetrieb der Ladeeinheiten zu ermöglichen oder den Zugriff einer Ladeinheit bzw. eines dazu geeigneten Roboters auf mehrere Ladekabel sicherzustellen, um Energieversorgungsvorgänge sequentiell abzuarbeiten.

In der DE 10 2009 006 982 A1 ist eine Energieversorgungseinheit bekannt, welche mit einem mehrgelenkigen Roboterarm ausgestattet ist, der zum Positionieren und Anschließen eines Ladesteckers an eine Ladebuchse eines aufzuladenden Kraftfahrzeugs dient.

Zusätzlich weist die Energieversorgungseinheit eine Detektoreinheit zur Positionsermittlung der Ladebuchse vom Kraftfahrzeug auf. Die Detektoreinheit erkennt die Position der Ladebuchse des Kraftfahrzeugs auf Basis von optischen oder geometrischen Merkmalen der Ladebuchse. Ferner ist an der Energieversorgungseinheit eine Kommunikationseinrichtung angeordnet, welche zum Empfangen von Informationen des Kraftfahrzeugs und eines Ladereglers ausgebildet ist. Der Laderegler dient zum Initiieren eines Beginns oder eines Abbruchs eines Ladevorgangs auf Basis des Ladezustands vom Kraftfahrzeug. Es wird auch vorgeschlagen, die Detektoreinheit zur Ermittlung der Position der Ladebuchse auf Basis eines RFID-Chips auszubilden (RFID = Radio Frequency Identification).

Schließlich wird in der DE 10 2012 216 980 A1 eine Roboterladestation zum Aufladen einer Batterie eines Elektrofahrzeugs beschrieben. Dabei ist der Roboter an einem Standrohr beweglich befestigt, welches mit einer Basisplatte gekoppelt ist. Der Roboter enthält ein Greiforgan mit einem elektrischen Stecker, welcher zur Kopplung mit einer fahrzeugseitigen Ladedose dient. Zur Anwesenheitserfassung eines aufzuladenden Kraftfahrzeugs ist in der Basisplatte ein Sensor vorhanden, welcher optische, akustische oder auch RFID-basierte Erfassungsmittel verwendet. Der Arm des Roboters enthält in der Nähe des Steckers ferner eine Kamera um die Position einer fahrzeugseitigen Ladedose zu erfassen und das Greiforgan des Roboters somit genau zur fahrzeugseitigen Ladedose bewegen zu können. Es wird auch vorgeschlagen, mehrere Kameras zu verwenden, um eine stereoskopische Ansicht des Kraftfahrzeugs und/oder dessen Ladedose bereitstellen zu können.

Aus der US 2014/0305545 A1 ist ein Kraftfahrzeug bekannt, das einen Laser in der Nähe einer Energieversorgungs-Schnittstelle aufweist.

Aus der DE 10 2012 216 980 A1 ist eine Roboterladestation zum Aufladen einer Batterie eines Elektrofahrzeugs bekannt, wobei die Roboterladestation eine Basisplatte und ein Standrohr umfasst, das mit der Basisplatte gekoppelt ist und sich im Wesentlichen quer zur Basisplatte erstreckt. Weiter weist die Roboterladestation einen Roboterarm auf, der sich vom Standrohr aus erstreckt und ein Greiforgan trägt, wobei der Roboterarm ausgestaltet ist, um das Greiforgan mit drei Bewegungsstufen zu bewegen. Dabei enthält das Greiforgan mehrere elektrische Kontakte, die zur Kopplung mit einer Steckdose, die am Elektrofahrzeug angeordnet ist, ausgestattet sind. Der Roboterarm kann dabei Zielverfolgungskameras aufweisen.

Aus der WO 94/03391 A1 ist eine weitere ortsfeste Roboterladestation bekannt, die zwei vom Roboterarm getrennte Kameras aufweist.

Aus der EP 2 332 772 A2 ist ein automatisiertes Aufladestationensystem zum Verbinden von Elektrofahrzeug-Energiequellen mit einer zentralen Energiequelle bekannt, mit einer Mehrzahl von Aufladestationen, die jeweils eine über eine zentrale Energiequelle gespeiste Energieversorgung aufweisen. Dabei erstrecken sich entlang der Aufladestationen definierte Verfahrwege. Weiter weist das System bewegbare Kopplungseinheiten auf, die jeweils zur Erzeugung einer elektrischen Verbindung zwischen einer Aufladeschnittstelle der Elektrofahrzeug-Energiequelle eines an einer Aufladestation positionierten Elektrofahrzeugs und der Energieversorgung der Aufladestation ausgebildet sind. Schließlich weist das System noch eine Steuerungseinheit zur bedarfsgerechten Steuerung der Kopplungseinheiten auf.

Aus der WO 2015/126320 A1 ist ein Verfahren bekannt, um eine Verbindung zwischen zwei beweglichen Objekten aufrechtzuerhalten.

Aus der nachveröffentlichten WO 2016/096194 A1 ist ein Verfahren zum automatisierten Aufladen eines elektrischen Energiespeichers in einem Fahrzeug bekannt, mit den Schritten:
- Bereitstellen eines Laderoboters, der einen Kontaktkopf mit einer Mehrzahl von Kontakten umfasst, wobei die Kontakte mit einer elektrischen Spannungsquelle verbunden sind;
- Empfangen von fahrzeugspezifischen Daten von dem Fahrzeug;
- Ermitteln der Position einer Ladebuchse an dem Fahrzeug unter Verwendung der empfangenen fahrzeugspezifischen Daten;
- Bestimmen einer Ladeposition basierend auf der ermittelten Position der Ladebuchse an dem Fahrzeug;
- Anfahren der Ladeposition mit dem Laderoboter;
- Einführen des Kontaktkopfs des Laderoboters in die Ladebuchse des Fahrzeugs und elektrisches Verbinden der Kontakte des Kontaktkopfs mit Kontakten der Ladebuchse, nachdem der Laderoboter die Ladeposition erreicht hat.

Aus US 2013/338820 A1 ist eine gattungsgemäße Energieversorgungseinheit bekannt umfassend mehrere Ladebuchten, jeweils mit Roboter zum automatisierten Aufladen eines Energiespeichers eines elektrischen Fahrzeugs und mit jeweils einer Bilderfassungseinrichtung.

Der Erfindung liegt vor dem genannten Stand der Technik daher die Aufgabe zu Grunde, ein Verfahren zur Durchführung von Energieversorgungsvorgängen zwischen wenigstens einer Energieversorgungseinheit und mehreren mit Energie zu versorgenden Kraftfahrzeugen bereitzustellen, welches in seiner Effizienz gesteigert werden kann.

Des Weiteren liegt der Erfindung die Aufgabe zu Grunde, eine geeignete Energieversorgungseinheit zur Durchführung des Verfahrens bereitzustellen.

Vorliegende Aufgaben werden durch die Merkmale von Patentanspruch 1 und 4 gelöst. Vorteilhafte Ausbildungen beziehungsweise Weiterbildungen der Erfindung sind den jeweiligen abhängigen Ansprüchen zu entnehmen.

Die Erfindung geht zunächst von einem Verfahren zur Durchführung von Energieversorgungsvorgängen zwischen wenigstens einer Energieversorgungseinheit und mehreren mit Energie zu versorgenden Kraftfahrzeugen aus. Dabei wird jeweils eine Position einer fahrzeugseitigen Energieversorgungs-Schnittstelle eines zu versorgenden Kraftfahrzeugs ermittelt. Eine automatisierte Kopplung zwischen einer fahrzeugseitigen Energieversorgungs-Schnittstelle und einer Energieversorgungs-Schnittstelle der Energieversorgungseinheit erfolgt jeweils dadurch, dass die Energieversorgungs-Schnittstelle der Energieversorgungseinheit über einen Roboter zur fahrzeugseitigen Energieversorgungs-Schnittstelle bewegt und mit dieser gekoppelt wird. Dem Roboter obliegt die Kopplung mehrerer Kraftfahrzeuge mit einer geeigneten Energieversorgungs-Schnittstelle der Energieversorgungseinheit. Er ist also mindestens für die Kopplung zweier Kraftfahrzeuge mit einer geeigneten Energieversorgungs-Schnittstelle zuständig.

Erfindungsgemäß wird nun vorgeschlagen, dass durch die Energieversorgungseinheit die Position einer fahrzeugseitigen Energieversorgungs-Schnittstelle eines solchen Kraftfahrzeugs ermittelt wird, welches einer bestimmten Energieversorgungs-Schnittstelle der Energieversorgungseinheit zugeordnet ist. Diese Positionsermittlung erfolgt auch dann, wenn der Roboter zur Bewegung und Kopplung der dem Kraftfahrzeug zugeordneten Energieversorgungs-Schnittstelle der Energieversorgungseinheit nicht zur Verfügung steht.

Auf diese Weise kann die Grundlage für eine deutliche Effizienzsteigerung in der Vorbereitung und Durchführung von Energieversorgungsvorgängen gelegt werden.

So kann beispielsweise von einem zweiten, zu versorgendes Kraftfahrzeug bereits dann die Position seiner Energieversorgungs-Schnittstelle relativ zur Energieversorgungseinheit ermittelt werden, während der Roboter noch damit beschäftigt ist, die Energieversorgungs-Schnittstelle eines ersten Kraftfahrzeugs mit einer dem ersten Kraftfahrzeug zugeordneten Energieversorgungs-Schnittstelle der Energieversorgungseinheit zu koppeln.

Beim Beginn des Energieversorgungsvorgangs für das zweite Kraftfahrzeug ist eine vorherige Ermittlung der Position der fahrzeugseitigen Energieversorgungs-Schnittstelle dann nicht mehr notwendig, was einen entsprechenden Zeitvorteil mit sich bringt. Der Roboter kennt bereits die Positionsdaten und kann diese direkt anfahren.

Es ist ausdrücklich darauf hinzuweisen, dass es sich bei dem Begriff "Energie" nicht nur um elektrische Energie in Form von Strom, sondern auch um chemische Energie in Form von flüssigem oder gasförmigem Kraftstoff (z. B. Benzin, Diesel, Gas, Wasserstoff) handeln kann.

Dementsprechend ist auch der Begriff "Energieversorgungseinheit" zu verstehen, welche beispielsweise in der Art einer Ladestation für elektrischen Strom, einer Zapfsäule für Kraftstoff oder dergleichen ausgebildet sein kann. Eine Kombination solcher Ausbildungen ist vor dem Hintergrund hybrider Fahrzeuge durchaus denkbar.

Des Weiteren kann der Roboter als Baueinheit in die Energieversorgungseinheit baulich integriert sein, muss es aber nicht. Der Roboter kann auch als separat ansteuerbare Bewegungseinrichtung für die Energieversorgungs-Schnittstelle der Energieversorgungseinheit ausgebildet sein. Im Übrigen ist unter "Roboter" im Sinne der Erfindung jede Einrichtung zu verstehen, die geeignet ist, eine Energieversorgungs-Schnittstelle der Energieversorgungseinheit zu bewegen und mit einer Energieversorgungs-Schnittstelle eines Kraftfahrzeugs zu koppeln. In konkreter Ausprägung kann als Roboter daher bereits ein einfacher Aktuator, aber auch ein komplexer Industrieroboter mit mehreren Freiheitsgraden verstanden werden.

Dabei wird die Position einer fahrzeugseitigen Energieversorgungs-Schnittstelle jeweils durch wenigstens eine vom Roboter örtlich getrennte Bilderfassungseinrichtung ermittelt, wobei jedem Parkplatz mindestens eine Bilderfassungseinrichtung zugeordnet ist. Diese ist vorzugsweise in der Nähe eines Parkplatzes eines zu versorgenden Kraftfahrzeugs angeordnet. Beispielsweise kann eine solche Bilderfassungseinrichtung an einer Überdachung oder Wand der Energieversorgungseinheit angeordnet sein.

Dies trägt zur Zuverlässigkeit des Verfahrens bei, insbesondere wenn mit einem Roboter eine Vielzahl von Energieversorgungs-Schnittstellen einer Energieversorgungseinheit zu bewegen und mit Kraftfahrzeugen zu koppeln ist.

In diesem Zusammenhang ist darauf hinzuweisen, dass zur Durchführung des erfindungsgemäßen Verfahrens bzw. zur Positionsermittlung einer fahrzeugseitigen Energieversorgungs-Schnittstelle der Einsatz unterschiedlichster Messsysteme denkbar ist.

So ist beispielsweise der Einsatz einer Art Sensorleiste denkbar, bei dem ein Tiefensensor, eine Webcam, ein 3D-Mikrofon und ein Beschleunigungssensor miteinander kombiniert werden. Hierdurch können markante geometrische Punkte der Energieversorgungseinheit im Raum sehr gut gemessen werden.

Unter Einsatz von Laserscannern können Markierungen oder geometrische Formen der Energieversorgungseinheit mittels des bekannten Triangulationsverfahrens genau und kostengünstig erfasst werden.

Photomischdetektoren (PMD-Kameras) arbeiten nach dem Prinzip des Lichtimpulsverfahrens, bei dem Messobjekte von Lichtimpulsen angeleuchtet und die Signallaufzeit gemessen wird. Aufgrund der Laufzeit kann die Entfernung zwischen Kamera und Objekt errechnet werden.

Zur räumlichen Messung (Photogrammmetrie) von geometrischen Formen der Energieversorgungseinheit ist der Einsatz mehrerer, wenigstens zweier, nah beieinander angeordneter Kameras denkbar.

Eine andere Ausbildung des Erfindungsgedankens schlägt vor, dass die Position einer fahrzeugseitigen Energieversorgungs-Schnittstelle jeweils durch Auswertung eines Projektionsmusters ermittelt wird, welches durch das zu versorgende Kraftfahrzeug auf eine solche Messplatte der Energieversorgungseinheit projiziert wird, welche dem zu versorgenden Kraftfahrzeug zugeordnet ist.

Auch dies kann die Zuverlässigkeit des Verfahrens erhöhen. Beispielsweise ist denkbar, dass das Projektionsmuster ein Muster von sich kreuzenden Linien ist, welches durch einen fahrzeugseitig angeordneten Laser auf die Messplatte projiziert wird. Hier ist der kostengünstige Einsatz von handelsüblichen Kreuzlinien-Lasern durchaus denkbar.

Ein solches Projektionsmuster kann leicht von einer Bilderfassungseinrichtung erkannt werden. Es kann vorzugsweise von einem Laser erzeugt werden. Dabei kann beispielsweise die Größe und Lage des Projektionsmusters relativ zu Messpunkten der Messplatte ausgewertet und darauf auf die Position des Lasers geschlossen werden.

Sobald die Position des Lasers ermittelt wurde, kann mit bekannten Verfahren der Koordinaten-Transformation auch auf die Position eines Bezugspunktes der fahrzeugseitigen Energieversorgungs-Schnittstelle geschlossen werden. Denn die relative Lage der fahrzeugseitigen Energieversorgungs-Schnittstelle relativ zum Laser ist bekannt.

Im Hinblick auf eventuelle Schadensfälle oder Vandalismus ist es sehr zweckmäßig, wenn ein jeder Energieversorgungsvorgang videoüberwacht wird

Wie bereits erwähnt, betrifft die Erfindung auch eine Energieversorgungseinheit zur Durchführung des erfindungsgemäßen Verfahrens. Diese weist wenigstens eine bewegliche Energieversorgungs-Schnittstelle auf. Diese ist über einen Roboter bewegbar und mit einer Energieversorgungs-Schnittstelle eines mit Energie zu versorgenden Kraftfahrzeugs koppelbar. Der Roboter dient zum Bewegen und Koppeln der wenigstens einen Energieversorgungs-Schnittstelle der Energieversorgungseinheit mit wenigstens zwei Kraftfahrzeugen.

Die Energieversorgungseinheit ist dadurch gekennzeichnet, dass wenigstens zwei Parkplätze zur Energieversorgung wenigstens zweier Kraftfahrzeuge vorhanden sind. Jedem Parkplatz ist wenigstens eine Bilderfassungseinrichtung der Energieversorgungseinheit zugeordnet, wobei die wenigstens eine Bilderfassungseinrichtung zur Ermittlung der Position einer solchen Energieversorgungs-Schnittstelle eines Kraftfahrzeugs dient, welche mit einer dieser zugeordneten Energieversorgungs-Schnittstelle der Energieversorgungseinheit gekoppelt werden soll. Dabei ist die ermittelte Position einer solchen fahrzeugseitigen Energieversorgungs-Schnittstelle dem Roboter zugänglich machbar. Dies kann drahtgebunden oder auch drahtlos erfolgen.

Um jeden Energieversorgungsvorgang besser überwachen zu können, kann jedem Parkplatz der Energieversorgungseinheit wenigstens eine Videoerfassungseinrichtung zugeordnet sein. Hierdurch können beispielsweise Überwachungszeiträume von mehreren Tagen realisiert werden.

In weiterer Ausbildung der Energieversorgungseinheit ist jedem Parkplatz der Energieversorgungseinheit wenigstens eine Messplatte zugeordnet, auf die ein geometrisches Muster projizierbar ist, wobei die wenigstens eine Bilderfassungseinrichtung eines Parkplatzes eine Ausrichtung auf die Messplatte aufweist.

Bei einer solchen Ausbildung kann mit der Energieversorgungseinheit eine spezielle Ausbildung des Verfahrens durchgeführt werden.

Bevorzugte Ausführungsbeispiele der Erfindung sind in den Figuren dargestellt und werden anhand der Figuren in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: eine erste Ausführungsform einer Energieversorgungseinheit von oben in der Vogelperspektive,
- Fig. 2: eine zweite Ausführungsform einer Energieversorgungseinheit von oben in der Vogelperspektive,
- Fig. 3: die Einzeldarstellung einer fahrzeugseitigen Energieversorgungs-Schnittstelle gemäß Ansicht III aus Fig. 2,
- Fig. 4: eine Ansicht auf die Energieversorgungs-Schnittstelle gemäß Ansicht IV aus Fig. 3,
- Fig. 5: eine Darstellung eines durch den Laser auf eine spezielle Projektionsfläche projizierbares Projektionsmuster,
- Fig. 6: eine dritte Ausführungsform einer Energieversorgungseinheit von oben in der Vogelperspektive und
- Fig. 7: ein Ablaufplan zur Verdeutlichung eines möglichen Verfahrensablaufs.

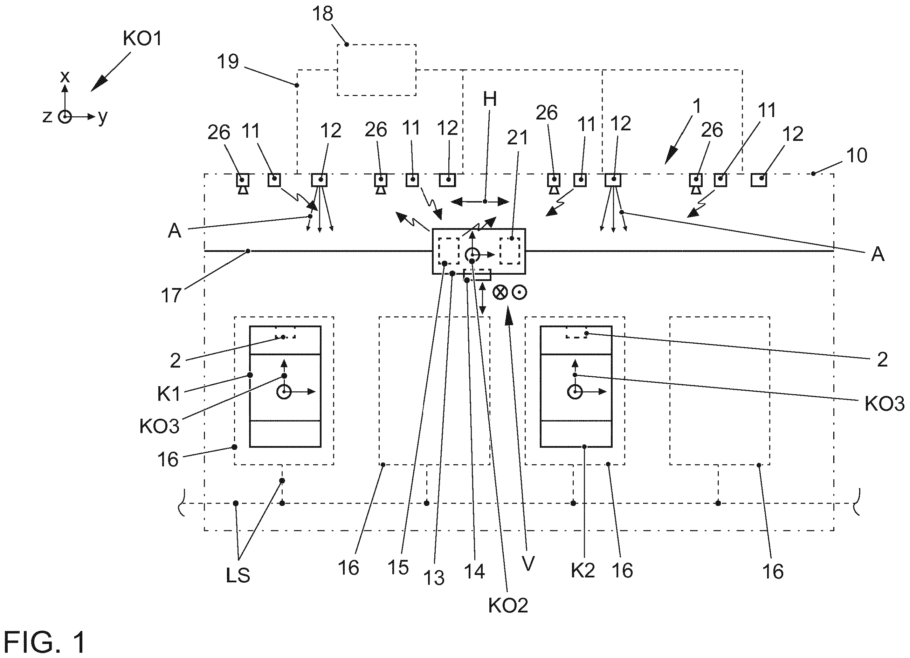

In der Fig. 1 ist eine Energieversorgungseinheit 1 ersichtlich. Konkret ist die Energieversorgungseinheit 1 als von Elektrofahrzeugen anfahrbarer Abstellplatz zur elektrischen Aufladung der Elektrofahrzeuge ausgebildet.

Vor der Energieversorgungseinheit 1 sind vier Parkplatz-Markierungen 16 ersichtlich, innerhalb derer aufzuladende Kraftfahrzeuge geparkt werden können.

Im vorliegenden Ausführungsbeispiel können aufzuladende Kraftfahrzeuge mittels eines induktiven Leitsystems LS automatisch innerhalb der Parkplatz-Markierungen 16 geparkt und zur Aufladung freigegeben werden.

Die Energieversorgungseinheit 1 umfasst einen Roboter 13, der auf einer Schiene 17 in einer horizontalen Bewegung H verfahrbar ist und somit vor jeder der Parkplatz-Markierungen 16 positioniert werden kann.

Der Roboter 13 weist zudem eine Energieversorgungs-Schnittstelle 14 in Form eines Ladesteckers auf. Der Ladestecker 14 ist über eine nicht näher dargestellte Mechanik in Richtung eines aufzuladenden Kraftfahrzeugs verfahrbar (vgl. Doppelpfeil). Die Mechanik gestattet auch eine vertikale Bewegung V des Ladesteckers 14.

Im Roboter 13 sind eine drahtlose Übermittlungseinrichtung 15 in Form eines WLAN-Ports und eine Steuereinrichtung 21 zur Bewegungssteuerung des Roboters 13 verbaut.

Demgegenüber sind seitens der Energieversorgungseinheit 1 jeder Parkplatz-Markierung 16, also jedem Parkplatz eine drahtlose Übermittlungseinrichtung 11 (WLAN-Port), eine Bilderfassungseinrichtung 12 (Kamera) und eine Videokamera 26 zugeordnet. Diese Baueinheiten sind jeweils an einer Überdachung 10 der Energieversorgungseinheit 1 montiert und stehen über Signalleitungen 19 mit einer Speicher-, Rechen- und Auswerteeinrichtung 18 in signaltechnischer Verbindung. Abweichend vom Ausführungsbeispiel kann die Bilderfassungseinrichtung 12 auch beweglicher Bestandteil der Energieversorgungseinheit 1 sein, also nicht ortsfest ausgebildet sein.

Mit K1 und K2 sind elektrisch aufzuladende Kraftfahrzeuge beziffert, die jeweils innerhalb einer Parkplatz-Markierung 16 geparkt wurden und somit als dem Ladestecker 14 zur Aufladung zugeordnet zu betrachten sind. Jedes der Kraftfahrzeuge K1, K2 weist eine Energieversorgungs-Schnittstelle 2 in Form einer Ladedose auf.

Mit KO1 ist ein Koordinatensystem der Energieversorgungseinheit 1, mit KO2 ein Koordinatensystem des Roboters 13 und mit KO3 ein solches des Kraftfahrzeugs K1 bzw. des Kraftfahrzeugs K2 beziffert.

Sind Lagekoordinaten eines interessierenden Punktes innerhalb eines dieser Koordinatensysteme bekannt, so kann die Speicher-, Rechen- und Auswerteeinrichtung 18 auf Grund bekannter Verfahren der Koordinatentransformation auch auf die relative Lage eines solchen Punktes relativ zu jedem der anderen Koordinatensysteme schließen. Sind also beispielsweise im Koordinatensystem KO1 die Lagekoordinaten der Ladedose 2 eines der Kraftfahrzeuge K1, K2 bekannt, kann auch auf deren Lage im Koordinatensystem KO2 des Roboters 13 geschlossen werden. Der Roboter 13 ist somit in der Lage, den Ladestecker 14 exakt zur Ladedose 2 zu bewegen.

Abweichend vom Ausführungsbeispiel sind auch weniger oder mehr Parkplatz-Markierungen 16 denkbar, mindestens jedoch zwei. Es ist auch möglich, dass mehrere Roboter 13 vorhanden sind, denen jeweils wenigstens zwei Parkplatz-Markierungen 16 zugeordnet sind. Jeder Roboter dient also immer zur Versorgung mehrerer, wenigstens zweier Kraftfahrzeuge.

Mehrere Energieversorgungsvorgänge der Energieversorgungseinheit 1 können nun wie folgt vonstattengehen:
Zunächst wird das Kraftfahrzeug K1 innerhalb einer Parkplatz-Markierung 16 eingeparkt. Dabei wird die Position seiner Ladedose 2 mit Hilfe der der Parkplatz-Markierung 16 zugeordneten Kamera 12 erfasst. Die Kamera 12 weist eine Ausrichtung A auf, die auf das Kraftfahrzeug K1 ausgerichtet ist. Statt einer Kamera ist auch der Einsatz mehrerer Kameras zur Positionserfassung denkbar. Hierdurch kann die Genauigkeit gesteigert werden. Es ist auch der Einsatz prägnanter Markierungen oder geometrischer Formen im Bereich der Ladedose 2 zu empfehlen, um die Erkennbarkeit der Ladedose 2 durch die Kamera 12 zu verbessern.

Die erfassten Bilddaten werden in der Speicher-, Rechen- und Auswerteeinrichtung 18 mit Referenzdaten verglichen und ausgewertet. Es werden Lagekoordinaten der Ladedose 2 berechnet und über die Übermittlungseinrichtung 11 an die Übermittlungseinrichtung 15 des Roboters 13 übermittelt. Die Übermittlungseinrichtung 15 gibt die Lagekoordinaten an die Steuereinrichtung 21 weiter. Dort werden diese zunächst abgespeichert.

Anschließend verfährt der Roboter 13 vor das Kraftfahrzeug K1 und bewegt seinen Ladestecker 14 in Kenntnis der Lagekoordinaten der Ladedose 2 zu dieser hin.

Während der Roboter 13 mit der Kopplung seines Ladesteckers 14 und der Ladedose 2 vom Kraftfahrzeug K1 beschäftigt ist, wird ein zweites Kraftfahrzeug K2 in eine Parkplatz-Markierung 16 eingeparkt. Sofort wird durch eine dieser Parkplatz-Markierung 16 bzw. dem Kraftfahrzeug K2 zugeordnete Kamera 12 wiederum die Position der Ladedose 2 vom Kraftfahrzeug K2 ermittelt und dem Roboter 13 zugänglich gemacht. Dies erfolgt in analoger Weise wie bereits beschrieben, obwohl der Roboter 13 noch nicht zur Bewegung und Kopplung seines Ladesteckers 14 mit der Ladedose 2 vom Kraftfahrzeug K2 zur Verfügung steht.

Sobald der Roboter 13 jedoch die Aufladung des Kraftfahrzeugs K1 beendet hat, entkoppelt er seinen Ladestecker 14 von der Ladedose 2 des Kraftfahrzeugs K1. Das Kraftfahrzeug K1 kann dann wieder automatisch ausgeparkt werden. Der Roboter 13 kann nach Entkopplung des Ladesteckers 14 diesen unverzüglich (ohne Zeitverzug) zur Ladedose 2 des Kraftfahrzeugs K2 bewegen und mit dieser koppeln, da die Position der Ladedose 2 des Kraftfahrzeugs K2 ja bereits bekannt ist.

Entsprechend wird verfahren, wenn weitere Kraftfahrzeuge in eine der Parkplatz-Markierungen 16 eingeparkt werden.

Mit den Videokameras 26 lassen sich die jeweiligen Energieversorgungsvorgänge und auch die dazwischen liegenden Zeitfenster lückenlos überwachen.

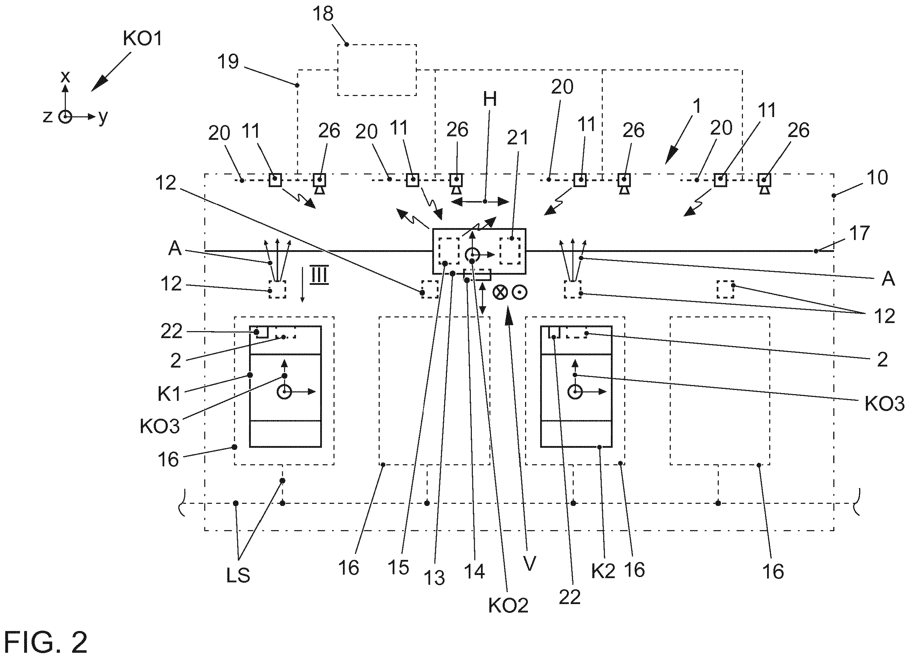

In der Figur 2 ist eine Energieversorgungseinheit 1 dargestellt, bei der im Unterschied zur vorherigen Ausführungsform jeder Parkplatz-Markierung 16 und somit jedem zu versorgenden Kraftfahrzeug jeweils eine Messplatte 20 zugeordnet ist.

Bei der vorliegenden Ausführungsform ist zudem die Ausrichtung A jeder Kamera 12 auf die jeweilige Messplatte 20 gerichtet. Ferner ist jedes zu versorgende Kraftfahrzeug K1, K2 mit einem Laser 22 in Form eines handelsüblichen Kreuzlinienlasers ausgestattet.

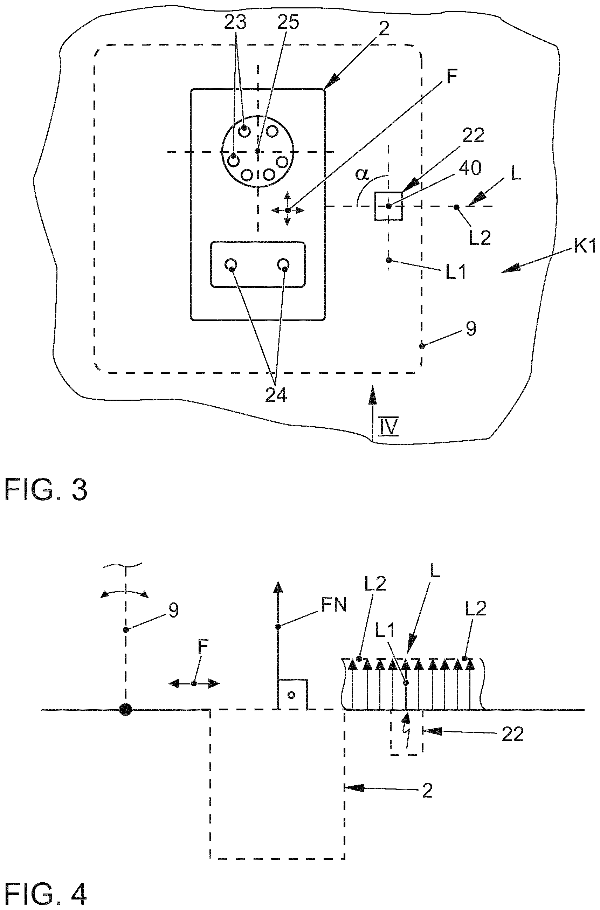

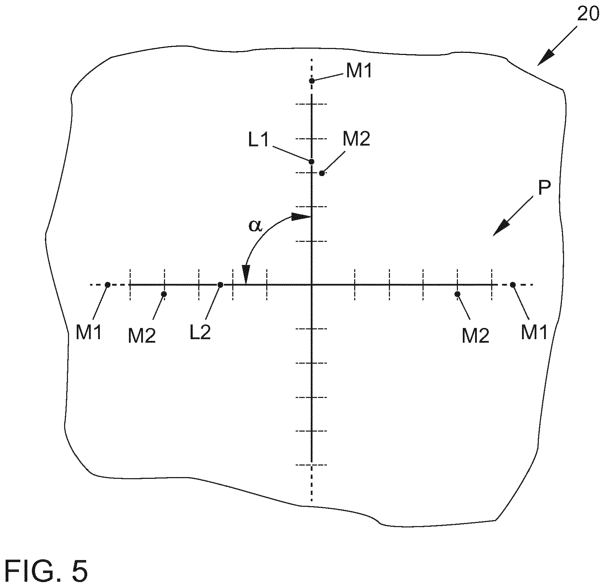

Wird ein zu versorgenden Kraftfahrzeug K1, K2 innerhalb einer Parkplatz-Markierung 16 geparkt, so wird auch der Laser 22 aktiviert und sendet Lichtstrahlen L aus (vgl. Figuren 3 und 4), die auf die Messplatte 20 gerichtet sind. Hierdurch wird auf der Messplatte 20 ein Projektionsmuster P (vgl. auch Fig. 5) erzeugt, welches von der Kamera 12 leicht erkennbar und durch die Speicher-, Rechen- und Auswerteeinrichtung 18 leicht auswertbar ist.

Über die Lage und Ausdehnung des Projektionsmusters P auf der Messplatte 20 wird auf die Lagekoordinaten des Lasers 22 geschlossen. Durch bekannte Verfahren der Koordinatentransformation kann die Position der Ladedose 2 berechnet werden. Auch hier erfolgt die Positionsermittlung der fahrzeugseitigen Ladedose 2 jeweils durch die Energieversorgungseinheit 1 bzw. durch deren Komponenten und wird dem Roboter 13 über die Übermittlungseinrichtungen 11 zugänglich gemacht. Dies erfolgt wiederum auch dann, wenn der Roboter 13 zur Bewegung und Kopplung des Ladesteckers 14 mit derjenigen Ladedose 2, deren Position zuvor gerade berechnet wurde, nicht zur Verfügung steht.

In den Figuren 3 und 4 ist die unmittelbare Umgebung der Ladedose 2 dargestellt. Die Ladedose 2 weist elektrische Kontakte 23 für einen Wechselstrom- und elektrische Kontakte 24 für einen Gleichstromanschluss auf. Mit 25 ist ein mittiger Bezugspunkt beziffert, der bspw. ein Erdungskontakt der Ladedose 2 sein kann. Die Ladedose 2 weist eine Flächenerstreckung F auf und ist mitsamt dem Laser 22 mittels einer schwenkbaren Abdeckung 9 abdeckbar.

Es ist erkennbar, dass im näheren Bereich der eigentlichen Ladedose 2 der bereits erwähnte Laser 22 angeordnet ist. Der Laser 22 weist einen Mittelpunkt 40 auf und ist in der Lage, Lichtstrahlen L in Form von sich kreuzenden Strahlenlinien L1 und L2 auszusenden. Insbesondere sendet der Laser 22 Lichtstrahlen L in Richtung bzw. parallel zu einer Flächennormalen FN der Flächenerstreckung F aus, die sich in einem Winkel α von 90 Grad kreuzen.

In Fig. 5 ist eine Messplatte 20 einzeln dargestellt. Es ist ersichtlich, dass durch die auf die Messplatte 20 geworfenen Lichtstrahlen L des Lasers 22 ein Projektionsmuster P von sich in einem Winkel α von 90° kreuzenden Strahlenlinien L1 und L2 erzeugt wird.

Die Messplatte 20 ist ferner mit Messstrichen M1 und M2 versehen, wobei aus der relativen Lage des Projektionsmusters P zu diesen Messstrichen M1, M2 auf die Position des Lasers 22 relativ zur Messplatte 20 und letztendlich über bekannte Verfahren der Koordinatentransformation auch auf die relative Lage der Ladedose 2 zum Roboter 13 geschlossen werden kann.

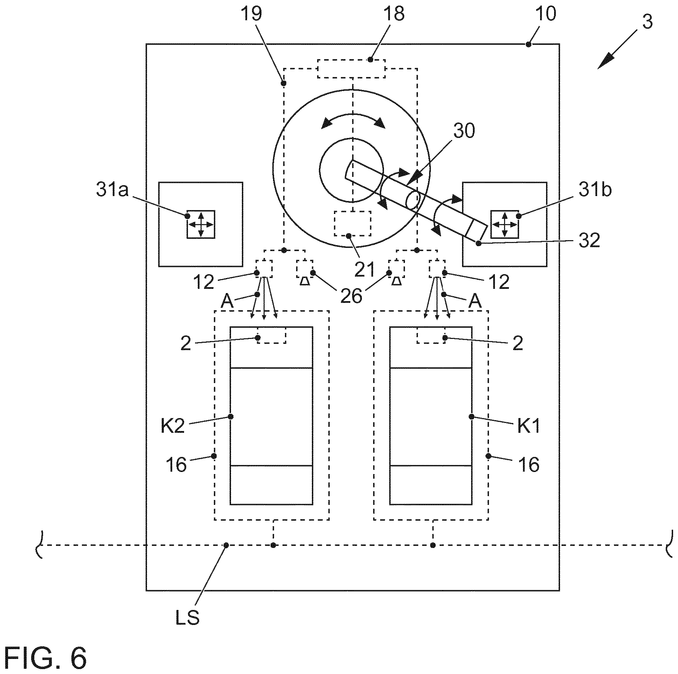

Aus Figur 6 ist ein weiteres Ausführungsbeispiel in Form einer Energieversorgungseinheit 3 ersichtlich. Bei der Energieversorgungseinheit 3 wird ein Roboter 30 eingesetzt, welcher als sogenannter Industrieroboter mit mehreren Freiheitsgraden (s. Doppelpfeile) ausgebildet ist.

Dem Roboter 30 obliegt die Kopplung von maximal zwei Kraftfahrzeugen K1, K2, welche auf den Parkplatz-Markierungen 16 der Energieversorgungseinheit 3 über das induktive Leitsystem LS eingeparkt werden, mit jeweils einer Energieversorgungs-Schnittstelle 31b bzw. 31a der Energieversorgungseinheit 3 in Form eines Ladesteckers.

Jeder Ladestecker 31a, 31b ist beweglich (vgl. Pfeile) und kann durch eine Greifeinrichtung 32 des Roboters 30 zu einer dem Ladestecker 31b bzw. 31a zugeordneten Ladedose 2 eines geparkten Kraftfahrzeugs K1 bzw. K2 bewegt und mit dieser gekoppelt werden. Auch hier ist jeder Parkplatz-Markierung 16 eine Kamera 12 zugeordnet, mit einer Ausrichtung A auf die Parkplatz-Markierung 16. Die Kamera 12 kann ortsfester oder auch beweglicher Bestandteil der Energieversorgungseinheit 3 sein. Sie kann beispielsweise mit einer Überdachung 10 verbunden sein. Eine Videokamera 26 dient wiederum zur Überwachung aller Vorgänge im Bereich der Parkplatz-Markierungen 16.

Über die Kameras 12 kann eine Position einer Ladedose 2 erkannt werden. Die Kameras 12 und 26 sowie eine Steuereinrichtung 21 des Roboters 30 stehen über Signalleitungen 19 mit einer Speicher-, Rechen- und Auswerteeinrichtung 18 in signaltechnischer Verbindung. So können die Positionsdaten jeder Ladedose 2 ermittelt und sofort danach oder zu einem späteren Zeitpunkt der Steuereinrichtung 21 zugänglich gemacht werden. Die Positionsermittlung erfolgt auch hier unabhängig von der Verfügbarkeit des Roboters 30, wodurch in analoger Weise zu den zuvor geschilderten Energieversorgungseinheiten auch hier deutliche Effizienzsteigerungen erzielbar sind.

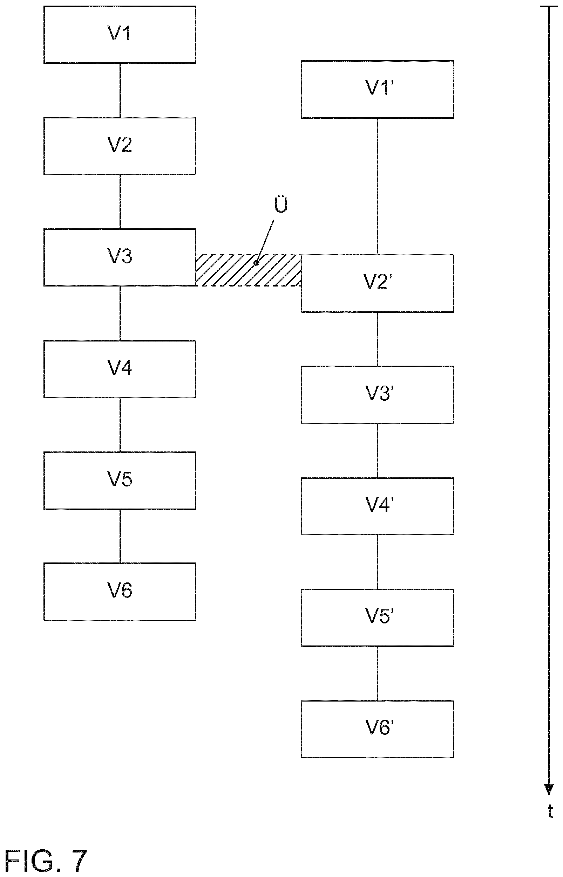

Abschließend soll anhand der Figur 7 das erfindungsgemäße Verfahren nochmals kurz anhand des zuletzt dargestellten Ausführungsbeispiels zusammengefasst werden:
Hierbei ist auch ein die Zeit t darstellender Zeitstrahl aufgezeichnet, um die zeitliche Beziehung von Verfahrensschritten zu verdeutlichen.

So wird zunächst ein automatisches Einparken des Kraftfahrzeugs K1 innerhalb der Parkplatz-Markierung 16 mit einer Zentimeter-Toleranz von bevorzugt 5 cm durchgeführt (Verfahrensschritt V1). Anschließend werden mit Hilfe der Kamera 12 die Positionsdaten der Ladedose 2 vom Kraftfahrzeug K1 bestimmt und dem Roboter 30 zur Verfügung gestellt (Verfahrensschritt V2).

In einem parallelen, ggf. zeitversetzten Ablauf wird in einem Verfahrensschritt V1' das zweite Kraftfahrzeug K2 automatisch eingeparkt. Zwischenzeitlich wurde damit begonnen, den dem Kraftfahrzeug K1 zugeordneten Ladestecker 31b durch den Roboter 30 zur Ladedose 2 des Kraftfahrzeugs K1 zu bewegen, um eine Kopplung herbeizuführen (Verfahrensschritt V3). Der Roboter 30 steht in dieser Zeit zur Bewegung des Ladesteckers 31a also nicht zur Verfügung.

Noch ehe der Roboter 30 für eine Bewegung des Ladesteckers 31a zur Verfügung steht (vgl. Überlappungsbereich Ü), wird die Ladedose 2 des Kraftfahrzeugs K2 durch die dem Kraftfahrzeug K2 zugeordnete Kamera 12 vermessen und deren Position ermittelt (Verfahrensschritt V2'). Dies bringt deutliche Zeitvorteile mit sich. Die ermittelten Positionsdaten können dem Roboter 30 sofort danach oder auch zu einem späteren Zeitpunkt zugänglich gemacht werden.

Zwischenzeitlich erfolgt nach erfolgreicher Kopplung die Aufladung des Kraftfahrzeugs K1 (Verfahrensschritt V4). Die Greifeinrichtung 32 des Roboters 30 wurde nach erfolgter Kopplung vom Ladestecker 31b mit der Ladedose 2 des Kraftfahrzeugs K1 vorübergehend vom Ladestecker 31 wieder gelöst und steht somit zur Bewegung und Kopplung des dem Kraftfahrzeug K2 zugeordneten Ladesteckers 31a zur Verfügung.

Wenn die Positionsdaten der Ladedose 2 vom Kraftfahrzeug K2 nicht bereits dem Roboter 30 übermittelt wurden, so werden diese jetzt dem Roboter 30 zur Verfügung gestellt, was ohne nennenswerte Zeitverzögerung möglich ist.

Dann kann durch den Roboter 30 nun auch eine Kopplung des Ladesteckers 31a mit der Ladedose 2 vom Kraftfahrzeug K2 erfolgen (Verfahrensschritt V3`) und die Aufladung des Kraftfahrzeugs K2 beginnen (Verfahrensschritt V4'). Nach erfolgter Kopplung steht der Roboter 30 daher sofort wieder zur Bewegung des Ladesteckers 31b zur Verfügung.

Zwischenzeitlich wurde die Aufladung des Kraftfahrzeugs K1 abgeschlossen. Der Ladestecker 31b konnte daher vom Roboter 30 wieder von der Ladedose 2 des Kraftfahrzeugs K1 getrennt und zu seiner Ausgangsposition zurückgeführt werden (Verfahrensschritt V5).

Nach dieser Entkopplung kann das Kraftfahrzeug K1 wieder ausgeparkt werden (Verfahrensschritt V6) und die Parkplatz-Markierung 16 steht für ein weiteres Kraftfahrzeug zur Verfügung.

Analog schließen sich diese Verfahrensschritte auch für das Kraftfahrzeug K2 an, also Entkopplung des Ladesteckers 31a (Verfahrensschritt V5') nach erfolgter Aufladung (V4') und Ausparken (Verfahrensschritt V6').

### BEZUGSZEICHENLISTE

- 1: Energieversorgungseinheit
- 2: fahrzeugseitige Energieversorgungs-Schnittstelle; Ladedose
- 3: Energieversorgungseinheit
- 9: Abdeckung
- 10: Überdachung
- 11: Übermittlungseinrichtung (WLAN-Port)
- 12: Bilderfassungseinrichtung; Kamera
- 13: Roboter
- 14: Energieversorgungs-Schnittstelle der Energieversorgungseinheit; Ladestecker
- 15: Übermittlungseinrichtung (WLAN-Port)
- 16: Parkplatz-Markierungen
- 17: Schiene
- 18: Speicher-, Rechen- und Auswerteeinrichtung
- 19: Signalleitungen
- 20: Messplatte
- 21: Steuereinrichtung
- 22: Laser; Kreuzlinienlaser
- 23,24: elektrische Kontakte
- 25: Bezugspunkt der Ladedose
- 26: Videokamera
- 30: Roboter
- 31a,b: Energieversorgungs-Schnittstelle der Energieversorgungseinheit; Ladestecker
- 32: Greifeinrichtung
- 40: Mittelpunkt des Lasers

- A: Ausrichtung der Kamera
- F: Flächenerstreckung der fahrzeugseitigen Energieversorgungs-Schnittstelle bzw. des Lasers
- FN: Flächennormale zur Flächenerstreckung
- H: horizontale Bewegung

- K1: Kraftfahrzeug
- K2: Kraftfahrzeug
- KO1: Koordinatensystem der Energieversorgungseinheit
- KO2: Koordinatensystem des Roboters
- KO3: Koordinatensystem des Kraftfahrzeugs
- L: Lichtstrahlen
- L1: Strahlenlinie
- L2: Strahlenlinie

- LS: induktives Leitsystem
- M1, M2: Messstriche
- P: Projektionsmuster der Lichtstrahlen
- t: Zeit
- Ü: Überlappungsbereich
- V: vertikale Bewegung
- V1-V6, V1'-V6': Verfahrensschritte

## Patentansprüche

1. Verfahren zur Durchführung von Energieversorgungsvorgängen zwischen wenigstens einer Energieversorgungseinheit (1, 3) und mehreren mit Energie zu versorgenden Kraftfahrzeugen (K1, K2), die auf jeweils unterschiedlichen Parkplätzen (16) abgestellt sind, wobei jedem Parkplatz (16) wenigstens eine von einem Roboter (13, 30) örtlich getrennte Bilderfassungseinrichtung (12) der Energieversorgungseinheit (1, 3) zugeordnet ist, wobei die wenigstens eine Bilderfassungseinrichtung (12) eine Position einer fahrzeugseitigen Energie-Versorgungsschnittstelle (2) ermittelt, wobei jeweils eine Position einer fahrzeugseitigen Energieversorgungs-Schnittstelle (2) eines zu versorgenden Kraftfahrzeugs (K1, K2) ermittelt und eine automatisierte Kopplung zwischen der fahrzeugseitigen Energieversorgungs-Schnittstelle (2) und einer Energieversorgungs-Schnittstelle (14; 31a, 31b) der Energieversorgungseinheit (1,3) dadurch erfolgt, dass die Energieversorgungs-Schnittstelle (14; 31a, 31b) der Energieversorgungseinheit (1,3) über einen Roboter (13,30) zur fahrzeugseitigen Energieversorgungs-Schnittstelle (2) bewegt und mit dieser gekoppelt wird, wobei dem Roboter (1,3) die Kopplung mehrerer Kraftfahrzeuge (K1, K2) mit einer geeigneten Energieversorgungs-Schnittstelle (14; 31a, 31b) der Energieversorgungseinheit (1,3) obliegt, wobei durch die Energieversorgungseinheit (1,3) die Position einer fahrzeugseitigen Energieversorgungs-Schnittstelle (2) eines solchen Kraftfahrzeugs (K1, K2) ermittelt wird, welches einer bestimmten Energieversorgungs-Schnittstelle (14; 31b, 31a) der Energieversorgungseinheit (1,3) zugeordnet ist, wobei die Positionsermittlung auch dann erfolgt, wenn der Roboter (13,30) zur Bewegung und Kopplung der dem Kraftfahrzeug (K1, K2) zugeordneten Energieversorgungs-Schnittstelle (14; 31b, 31a) der Energieversorgungseinheit (1,3) nicht zur Verfügung steht.

2. Verfahren nach Anspruch 1, **dadurch gekennzeichnet, dass** die Position einer fahrzeugseitigen Energieversorgungs-Schnittstelle (2) jeweils durch Auswertung eines Projektionsmusters (P) ermittelt wird, welches durch das zu versorgende Kraftfahrzeug (K1, K2) auf eine solche Messplatte (20) der Energieversorgungseinheit (1) projiziert wird, welche dem zu versorgenden Kraftfahrzeug (K1, K2) zugeordnet ist.

3. Verfahren nach einem der vorhergehenden Ansprüche, **dadurch gekennzeichnet, dass** ein jeder Energieversorgungsvorgang videoüberwacht wird.

4. Energieversorgungseinheit (1,3) zur Durchführung des Verfahrens nach einem der vorhergehenden Ansprüche, mit wenigstens einer beweglichen Energieversorgungs-Schnittstelle (14; 31a, 31b), die jeweils mit einer Energieversorgungs-Schnittstelle (2) eines mit Energie zu versorgenden Kraftfahrzeugs (K1, K2) koppelbar ist und mit wenigstens einem Roboter (13,30), der zum Koppeln einer Energieversorgungs-Schnittstelle (14; 31a, 31b) der Energieversorgungseinheit (1,3) mit wenigstens zwei Kraftfahrzeugen (K1, K2) ausgebildet ist, wobei die Energieversorgungseinheit (1,3) eine Mehrzahl von Bilderfassungseinrichtungen und wenigstens zwei Parkplätze (16) zur Energieversorgung wenigstens zweier Kraftfahrzeuge (K1, K2) aufweist, die auf den unterschiedlichen Parkplätzen (16) abgestellt sind, und wobei jedem Parkplatz (16) wenigstens eine Bilderfassungseinrichtung (12) der Energieversorgungseinheit (1,3) zugeordnet ist, die von dem Roboter (13, 30) örtlich getrennt ist, wobei die wenigstens eine Bilderfassungseinrichtung (12) zur Ermittlung der Position einer solchen Energieversorgungs-Schnittstelle (2) eines Kraftfahrzeugs (K1, K2) dient, welche mit einer dieser zugeordneten Energieversorgungs-Schnittstelle (14; 31b, 31a) der Energieversorgungseinheit (1,3) gekoppelt werden soll, wobei die ermittelte Position einer solchen fahrzeugseitigen Energieversorgungs-Schnittstelle (2) dem Roboter (13,30) zugänglich ist, wobei die Energieversorgungseinheit (1, 3) derart ausgebildet ist, dass die Positionsermittlung der Energieversorgungs-Schnittstelle (2) eines Kraftfahrzeugs (K1, K2) mittels der Bilderfassungseinrichtung (12) auch dann erfolgt, wenn der Roboter (13, 30) zur Bewegung und Kopplung der dem Kraftfahrzeug (K1, K2) zugeordneten Energieversorgungs-Schnittstelle (14; 31b, 31a) der Energieversorgungseinheit (1, 3) nicht zur Verfügung steht.

5. Energieversorgungseinheit (1,3) nach Anspruch 4, **dadurch gekennzeichnet, dass** jedem Parkplatz (16) der Energieversorgungseinheit (1,3) wenigstens eine Videoerfassungseinrichtung (26) zugeordnet ist.

6. Energieversorgungseinheit (1,3) nach einem der Ansprüche 4 oder 5, **dadurch gekennzeichnet, dass** jedem Parkplatz (16) der Energieversorgungseinheit (1) wenigstens eine Messplatte (20) zugeordnet ist, auf die ein geometrisches Muster (P) projizierbar ist, wobei die wenigstens eine Bilderfassungseinrichtung (12) des Parkplatzes (16) eine Ausrichtung (A) auf die Messplatte (20) aufweist.

## Claims

1. Method for performing power supply processes between at least one power supply unit (1, 3) and a plurality of motor vehicles (K1, K2) that are to be supplied with power, which are parked in respectively different parking spaces (16), wherein each parking space (16) is assigned at least one image capture device (12) of the power supply unit (1, 3) that is spatially separate from a robot (13, 30), wherein the at least one image capture device (12) ascertains a position of a vehicle-side power supply interface (2), wherein in each case a position of a vehicle-side power supply interface (2) of a motor vehicle (K1, K2) to be supplied is ascertained and automated coupling between the vehicle-side power supply interface (2) and a power supply interface (14; 31a, 31b) of the power supply unit (1, 3) is realized by virtue of the fact that the power supply interface (14; 31a, 31b) of the power supply unit (1, 3) is moved via a robot (13, 30) to the vehicle-side power supply interface (2) and is coupled to the latter, wherein the robot (1, 3) is made to couple a plurality of motor vehicles (K1, K2) to a suitable power supply interface (14; 31a, 31b) of the power supply unit (1, 3), wherein the position of a vehicle-side power supply interface (2) of a motor vehicle (K1, K2) that is assigned to a specific power supply interface (14; 31b, 31a) of the power supply unit (1, 3) is ascertained by way of the power supply unit (1, 3), wherein the position is also ascertained if the robot (13, 30) is not available for moving and coupling the power supply interface (14; 31b, 31a) of the power supply unit (1, 3) that is assigned to the motor vehicle (K1, K2) .

2. Method according to Claim 1, **characterized in that** the position of a vehicle-side power supply interface (2) is ascertained in each case by evaluating a projection pattern (P) that is projected by the motor vehicle (K1, K2) to be supplied onto a measurement plate (20) of the power supply unit (1) that is assigned to the motor vehicle (K1, K2) to be supplied.

3. Method according to either of the preceding claims, **characterized in that** each power supply operation is monitored by video.

4. Power supply unit (1, 3) for carrying out the method according to any of the preceding claims, comprising at least one movable power supply interface (14; 31a, 31b), which is able to be coupled in each case to a power supply interface (2) of a motor vehicle (K1, K2) that is to be supplied with power, and comprising at least one robot (13, 30) configured for coupling a power supply interface (14; 31a, 31b) of the power supply unit (1, 3) to at least two motor vehicles (K1, K2), wherein the power supply unit (1, 3) has a plurality of image capture devices and at least two parking spaces (16) for supplying at least two motor vehicles (K1, K2) parked in the different parking spaces (16) with power, and wherein each parking space (16) is assigned at least one image capture device (12) of the power supply unit (1, 3) that is spatially separate from the robot (13, 30), wherein the at least one image capture device (12) serves for ascertaining the position of a power supply interface (2) of a motor vehicle (K1, K2) that is to be coupled to a power supply interface (14; 31b, 31a) of the power supply unit (1, 3) assigned thereto, wherein the ascertained position of such a vehicle-side power supply interface (2) is accessible to the robot (13, 30), wherein the power supply unit (1, 3) is configured such that the position of the power supply interface (2) of a motor vehicle (K1, K2) is also ascertained by means of the image capture device (12) if the robot (13, 30) is not available for moving and coupling the power supply interface (14; 31b, 31a) of the power supply unit (1, 3) that is assigned to the motor vehicle (K1, K2).

5. Power supply unit (1, 3) according to Claim 4, **characterized in that** each parking space (16) of the power supply unit (1, 3) is assigned at least one video capture device (26).

6. Power supply unit (1, 3) according to either of Claims 4 and 5, **characterized in that** each parking space (16) of the power supply unit (1) is assigned at least one measurement plate (20) onto which a geometric pattern (P) is projectable, wherein the at least one image capture device (12) of the parking space (16) is in alignment (A) with the measurement plate (20).

## Revendications

1. Procédé permettant d'exécuter des processus d'alimentation en énergie entre au moins une unité d'alimentation en énergie (1, 3) et plusieurs véhicules automobiles (K1, K2) à alimenter en énergie qui sont garés respectivement sur des places de parking (16) différentes, dans lequel au moins un dispositif d'acquisition d'image (12), géographiquement séparé d'un robot (13, 30), de l'unité d'alimentation en énergie (1, 3) est associé à chaque place de parking (16), dans lequel ledit au moins un dispositif d'acquisition d'image (12) détermine une position d'une interface d'alimentation en énergie (2) côté véhicule, dans lequel respectivement une position d'une interface d'alimentation en énergie (2) côté véhicule d'un véhicule automobile à alimenter (K1, K2) est déterminée et un couplage automatisé entre l'interface d'alimentation en énergie côté véhicule (2) et une interface d'alimentation en énergie (14 ; 31a, 31b) de l'unité d'alimentation en énergie (1, 3) est effectué en ce que l'interface d'alimentation en énergie (14 ; 31a, 31b) de l'unité d'alimentation en énergie (1, 3) est déplacée par un robot (13, 30) jusqu'à l'interface d'alimentation en énergie côté véhicule (2) et est couplée à celle-ci, dans lequel le robot (1, 3) est en charge du couplage de plusieurs véhicules automobiles (K1, K2) à une interface d'alimentation en énergie (14 ; 31a, 31b) appropriée de l'unité d'alimentation en énergie (1, 3), dans lequel l'unité d'alimentation en énergie (1, 3) détermine la position d'une interface d'alimentation en énergie côté véhicule (2) d'un véhicule automobile (K1, K2) qui est associé à une certaine interface d'alimentation en énergie (14 ; 31b, 31a) de l'unité d'alimentation en énergie (1, 3), dans lequel la détermination de la position est effectuée même si le robot (13, 30) servant à déplacer et à coupler l'interface d'alimentation en énergie (14 ; 31b, 31a), associée au véhicule automobile (K1, K2), de l'unité d'alimentation en énergie (1, 3) n'est pas disponible.

2. Procédé selon la revendication 1, **caractérisé en ce que** la position d'une interface d'alimentation en énergie côté véhicule (2) est déterminée respectivement par une évaluation d'un motif de projection (P) qui est projeté par le véhicule automobile à alimenter (K1, K2) sur une plaque de mesure (20) de l'unité d'alimentation en énergie (1) qui est associée au véhicule automobile à alimenter (K1, K2).

3. Procédé selon l'une quelconque des revendications précédentes, **caractérisé en ce que** chaque processus d'alimentation en énergie est surveillé par vidéo.

4. Unité d'alimentation en énergie (1, 3) permettant d'exécuter le procédé selon l'une quelconque des revendications précédentes, comprenant au moins une interface d'alimentation en énergie (14 ; 31a, 31b) mobile qui peut respectivement être couplée à une interface d'alimentation en énergie (2) d'un véhicule automobile à alimenter en énergie (K1, K2), et comprenant au moins un robot (13, 30) qui est réalisé pour coupler une interface d'alimentation en énergie (14 ; 31a, 31b) de l'unité d'alimentation en énergie (1, 3) à au moins deux véhicules automobiles (K1, K2), dans lequel l'unité d'alimentation en énergie (1, 3) présente une pluralité de dispositifs d'acquisition d'image et au moins deux places de parking (16) pour l'alimentation en énergie d'au moins deux véhicules automobiles (K1, K2) qui sont garés sur les différentes places de parking (16), et dans lequel au moins un dispositif d'acquisition d'image (12) de l'unité d'alimentation en énergie (1, 3), qui est géographiquement séparé du robot (13, 30), est associé à chaque place de parking (16), dans lequel ledit au moins un dispositif d'acquisition d'image (12) sert à déterminer la position d'une interface d'alimentation en énergie (2) d'un véhicule automobile (K1, K2) qui doit être couplée à une interface d'alimentation en énergie (14 ; 31b, 31a), qui lui est associée, de l'unité d'alimentation en énergie (1, 3), dans lequel la position déterminée d'une telle interface d'alimentation en énergie côté véhicule (2) est accessible pour le robot (13, 30), dans lequel l'unité d'alimentation en énergie (1, 3) est réalisée de telle sorte que la détermination de la position de l'interface d'alimentation en énergie (2) d'un véhicule automobile (K1, K2) au moyen du dispositif d'acquisition d'image (12) est effectuée même si le robot (13, 30) servant à déplacer et à coupler l'interface d'alimentation en énergie (14 ; 31b, 31a), associée au véhicule automobile (K1, K2), de l'unité d'alimentation en énergie (1, 3), n'est pas disponible.

5. Unité d'alimentation en énergie (1, 3) selon la revendication 4, **caractérisée en ce qu'**au moins un dispositif d'acquisition de vidéo (26) est associé à chaque place de parking (16) de l'unité d'alimentation en énergie (1, 3).

6. Unité d'alimentation en énergie (1, 3) selon l'une quelconque des revendications 4 ou 5, **caractérisée en ce qu'**au moins une plaque de mesure (20) est associée à chaque place de parking (16) de l'unité d'alimentation en énergie (1), sur laquelle un motif géométrique (P) peut être projeté, dans lequel ledit au moins un dispositif d'acquisition d'image (12) de la place de parking (16) présente un alignement (A) sur la plaque de mesure (20).
